Europäisches Patentamt

**European Patent Office**

**Office européen des brevets**

(11) Publication number: **0 155 175**
A2

## (12) EUROPEAN PATENT APPLICATION

(21) Application number: **85301687.1**

(22) Date of filing: **12.03.85**

(51) Int. Cl.⁴: **B 32 B 13/02**, B 32 B 18/00,
C 04 B 28/34, E 04 B 1/78
//
(C04B28/34,
14:04, 14:20, 14:30, 32:02, 38:00)

(30) Priority: **12.03.84 US 588576**

(43) Date of publication of application: **18.09.85**
**Bulletin 85/38**

(84) Designated Contracting States: **AT BE CH DE FR GB IT
LI LU NL SE**

(71) Applicant: **Armstrong World Industries, Inc., P.O.
Box 3001, Lancaster Pennsylvania 17604 (US)**

(72) Inventor: **Landers, Albert Gerald, 379 Blue Bell Drive,
Mountville, PA 17554 (US)**
Inventor: **Tymon, Thomas Michael, 515 Chestnut Street,
Lancaster, PA 17603 (US)**

(74) Representative: **Darby, David Thomas et al, Abel & Imray
Northumberland House 303-306 High Holborn, WC1V 7LH
London (GB)**

(54) Silicate compositions and products utilising them.

㊗ Inorganic gels for preparing high temperature resistant
and preferably asbestos-free gaskets and other shaped
structures are made by treating mica containing interstitial
lithium and/or sodium ions and having a charge per struc-
tural unit within the range of from about $-0.5$ to $-1.0$ with a
source of multivalent cations that have an ionic radius smal-
ler than that of $Li^+$ for a time sufficient to cause an ion ex-
change reaction to occur between at least some of the multivalent cations and at least some of the interstitial ions.

0155175

This invention relates to gellable silicate materials, processes for their manufacture, and shaped articles, more especially gaskets, formed from them.

Asbestos-containing gaskets are well-known and have achieved significant commercial success. The commercial success of asbestos-containing gaskets has been primarily due to the physical and chemical properties imparted to the gaskets by the asbestos fibers. The asbestos fibers facilitate the production and processability of the gaskets and the gaskets exhibit excellent heat resistance. Such properties make asbestos-containing gaskets particularly useful in applications where they will be exposed to high flange pressure and high temperatures. As a result, these gaskets have been extensively employed in the automotive and compressor industries.

Unfortunately, recent medical evidence indicates that asbestos fibers can cause health hazards, particularly when inhaled. These health hazard problems of asbestos fibers are well-known, and accordingly, the gasket industry has been searching for replacement gasket forming compositions which need not, and preferably do not, contain asbestos fibers but yet achieve substantially the same physical and chemical properties as the prior art asbestos-based gasket forming compositions.

There remains a need for a composition which need not, and preferably does not, contain asbestos, particularly for use in gasket and other high temperature applications, and which exhibits good high temperature stability, good chemical resistance and which will maintain a low leakage rate.

Certain asbestos-free papers or other sheet material may be produced from water-swellable inorganic gels and, in particular, gellable water-swelling sheet silicates. For example, United States Patent No. 4,239,519 is directed to the preparation of inorganic, crystal-containing gels and papers, fibers, films, boards, and coatings produced therefrom. The method for making the precursor gellable silicates involves three steps:

(a) a fully or predominantly crystalline body is formed which contains crystals consisting esssentially of a lithium and/or sodium water-swelling mica selected from the group of fluorhectorite, hydroxyl hectorite, boron fluorphlogopite, hydroxyl boron phlogopite, and solid solutions among these, and between one or more of these and other structurally compatible species selected from the group of talc, fluortalc, polylithionite, fluorpolylithionite, phlogopite, and fluorphlogopite;

(b) that body is contacted with a polar liquid, normally water, to cause swelling and disintegration of the body accompanied with the formation of a gel; and

(c) the solid: liquid ratio of the gel is adjusted to a desired value depending upon the application therefor.

Glass-ceramics are the preferred crystalline starting bodies. Those products are then contacted with a source of large cations to cause macro flocculation of the gel and an ion exchange reaction to take place between the large cations and the $Li^+$ and/or $Na^+$ ions from the interlayer of the crystals.

U.S. Patent No. 4,239,519 specifies using cations that have an ionic radius larger than the lithium cation with which they are exchanged. (Unless otherwise specified, the ionic radii data listed below refer to Shannon and Prewitt ionit radii, R.D. Shannon, Acta Crystallogr., A32, 751 (1976).) The ionic radii for large exchange cations specified in U.S. Patent No. 4,239,519 are set forth in Table 1, as is the ionic radius of $Li^+$. Ionic radii are given throughout in Angstroms; conversion to nm may be achieved by dividing the values given by 10.

0155175

## Table 1

| Cation | Ionic Radius (Coordination No. 6) [1][2] |
|---|---|
| $Li^+$ | 0.9 |
| $K^+$ | 1.52 |
| $Rb^+$ | 1.66 |
| $Cs^+$ | 1.81 |
| $Ca^{2+}$ | 1.14 |
| $Sr^{2+}$ | 1.32 |
| $Ba^{2+}$ | 1.49 |
| $Pb^{2+}$ | 1.33 |
| $NH_4^+$ | 1.48 [3] |

(1)   Based on $F^- = 1.19$

(2)   TM complexes considered low spin

(3)   Pauling Ionic Radius

It has now been unexpectedly discovered that high temperature resistant sheet, paper, board, film, fiber and coating materials may be made from a silicate gel that is prepared by utilizing an exchange cation that is selected from a group of mulivalent cations which have an ionic radius smaller than lithium.  Such materials have surprisingly been found to exhibit, in general, better sealing characteristics in gasket sealing tests (for example, measuring leakage rates) than materials that are prepared, as per the teaching of the prior art, with large exchange cations. Furthermore, gasket materials that are produced according to the present invention are stable to temperatures of approximately 800°C. (By contrast, asbestos gasket materials are stable to temperatures of approximately 500°C.) The materials of the present invention also exhibit relatively good ambient and high temperature flexibility. In particular, it has been found that the use of $Cu^{2+}$ (r = 0.62 A), $Fe^{2+}$ (r = 0.63 A) and $Mg^{2+}$ (r = 0.65 A) as an exchange cation results in a flexible inorganic paper that can be readily prepared. In addition, the materials of the present invention exhibit improved dewatering and wet strength in the paper forming process over the materials that are prepared using prior art materials.

It has been surprisingly found that, by using a synthetic mica that has been ion-exchanged with cations of ionic radius less than the lithium ion, it is possible to manufacture a paper that, for a given thickness, is much stronger and more processable than one made using a synthetic mica ion-exchanged with a cation larger than the lithium ion. It has further surprisingly been found that, in contrast to using micas exchanged with larger cations, coherent paper may be made on conventional paper-making equipment, e.g., a fourdrinier machine, and the present invention accordingly provides such a process. Still further, whereas it has previously, using the larger cation-exchanged micas, been necessary to have a high fiber content to manufacture a coherent paper by any method, it has proved possible, using a smaller cation-exchanged mica, to make a coherent paper with a low or normal fiber content. The present invention accordingly provides such a material.

The flexible inorganic materials of the present invention may be prepared by utilizing, as a starting material, a gellable water-swelling silicate that has a charge per structural unit of -0.5 to -1.0, advantageously -0.6 to -1.0, and which contains interstitial $Li^+$ and/or $Na^+$ ions. The term "charge per structural unit" as used herein refers to an average charge density as measured by the methods of G. Lagaly and A. Weiss, "Determination of Layer Charge in Mica-type Layer Silicates", Proceedings of International Clay Conference, 61-80, (1969), and G. Lagaly, "Characteristics of Clays by Organic Compounds", Clay Minerals, 16, 1-21, (1981).

The silicate generally has morphologies that are represented by thin flakes in various strips and ribbons. The ribbons and strips have typical measurements of from about 500 A to 100,000 A long, and preferably 5,000 A to 100,000 A long, 500 A to 5000 A wide and less than 100 A thick.

For example, the silicate may be made according to the procedures of U.S. Patent NO. 4,239,519, and may be prepared by contacting a body consisting essentially of crystals of lithium and/or sodium water-swelling mica selected from the group of fluorhectorite, hydroxyl hectorite, boron fluorphlogopite, hydroxyl boron phlogopite, and solid solutions among those and between one or more of those and other structurally-compatible species selected from the group of talc, fluortalc, polylithionite, fluorpolylithionite, phlogopite and fluorphlogopite, with a polar liquid, customarily water, for a time sufficient to cause the disintegration and swelling of the body with the resultant formation of gel.

The silicate is then contacted with a source of small cations to effect an ion exchange reation between the small cations and the interstitial $Li^+$ and/or $Na^+$ ions.   Small cations which are suitable for use in this invention are preferably those cations which are multivalent and have an ionic radius smaller than that of lithium. Particularly useful cations include $Cu^{2+}$, $Mg^{2+}$, $Zn^{2+}$, $Ni^{3+}$, $Fe^{3+}$, $Ce^{4+}$, and $Co^{2+}$. This ion exchange reaction may be carried out with the silicate material itself, i.e., before paper, films, boards of other products are formed therefrom, or, depending on the nature of the end product, it may be conducted as part of and during the actual forming process for the product.

For example, the gasket materials of the present invention are prepared by reacting, generally with agitation, a sheet silicate gel with a suitable source of a smaller cation in order to effect an ion exchange between the small cations and the interstitial $Li^+$ and/or $Na^+$ cations in the silicate gel to form exchanged macro flocculated particles. For example, if the exchange cation of choice is $Cu^{2+}$ or $Mg^{2+}$, the gel is advantageously reacted with $CuSO_4$ or $MgSO_4$. If the materials of the present invention are to be formed into sheet or gasket materials, the resultant exchanged gel will be agitated with sufficient sheet to produce a particle size distribution which leads to suitable particle packing in the sheet forming operation. Following this process the resultant floc is optionally washed to remove any excess salt solution and the consistency of the slurry is adjusted to, for example, from about 0.75% to about 2% solids. To promote better drainage rates on a fourdrinier wire, polyelectrolyte flocculating agents may then be added to the slurry, advantageously at a level of from about 0.1% to about 1%, and preferably 0.2% to 0.3%, of floc solids. One example of a suitable polyelectrolyte flocculating agent is Hydraid 777, which is a trademark of Calgon Corporation for an acrylamide/DMDAAC/DEDAAC terpolymer.

This slurry is then fed to a papermaking apparatus where it is dewatered by free drainage and/or vacuum drainage followed by pressing and drying on drum driers.

If desired, and depending on the intended end use of the product, additional inert materials may be added to the slurry prior to dewatering. For example, if desired one or more fibrous materials, which may be fibers, may be added to the slurry to improve its drainage rate and to provide an end product that has improved strength and/or handleability. When the desired end products are gasket materials, the fibers of choice are cellulose fibers, glass fibers, silicate fibers, mineral fibers, carbon fibers, metal fibers and ceramic fibers. In addition, latex or other binders may be added to the slurry to provide for a product with improved strength characteristics. Generally, when organic materials are utilized in the gasket materials of the present invention, they will burn off at elevated temperatures without affecting the sealing characteristics of the gasket.

The compositions of the present invention are adaptable for uses other than gasket materials. For example, as disclosed in U.S. Application Serial No. 588,577, and British Patent Application No.         , they may be utilized in combination with phosphate bonding materials to provide laminates that are fire-resistant and relatively smoke-free.

In the following Examples, the starting material utilized was a lithium fluorhectorite made according to procedures taught in U.S. Patent No. 4,239,519.

The gasket sealing tests specified for certain of the Examples were electromechanical air leakage tests conducted according to the requirements set forth in pages 1-3 of the SAE (Society of Automotive Engineers, Inc.) technical paper No. 83022 (ISSN 0148-7191/83/ 0228-0220, 1983).

### Example 1

This example illustrates a method of producing a copper exchanged fluorhectorite gelled silicate and a formed sheet prepared therefrom.

A slurry of copper fluorhectorite was prepared by adding 325 grams of a 10% dispersion of lithium fluorhectorite to 2 liters of 0.2N $CuSO_4$ solution. The slurry was then agitated with a high shear mixer to reduce the particle size of the resultant floc, washed and then analyzed for water content and diluted to result in a 2% solids slurry. The slurry was transferred to an 11.5" x 11.5" (about 0.29 m square) hand sheet mold (manufactured by Williams Apparatus Co.) and dewatered. The resultant formed sheet was then wet pressed and dried on a drum drier. The sheet had good flexibility and performed well in the gasket sealing test.

## Example 2

A slurry of copper fluorhectorite was prepared by adding 800 grams of 10% lithium fluorhectorite to 4000 grams of 0.15N $CuSO_4$. The resultant floc was agitated and washed as described in Example 1. Four grams of Kaowool (The Babcock & Wilcox Co.'s trademark for alumina-silicate ceramic fiber) was dispersed in water followed by the addition of the copper fluorhectorite floc to produce a slurry with a solids content of about 2%. The pH was adjusted to 4.0 with $H_2SO_4$ and 4 ml of a 0.1% solution of a cationic polyelectrolyte polymer (Hydraid 777) was then added. The slurry was transferred to a 14" x 14" (about 0.36 m square) hand sheet mold and dewatered. The resultant sheet was wet-pressed and dried. The resultant sheet had good flexibility and performed well in the gasket sealing test.

## Example 3

Copper fluorhectorite was prepared by adding 475 grams of 10% lithium fluorhectorite to 2375 ml of 1N $CuSO_4$. The resultant floc was agitated and washed as described in the examples above. Four grams of Kaowool were dispersed in water followed by the addition of the copper fluorhectorite floc. The solids content of the resultant slurry was adjusted to 2% and then 0.5 gram of a 10% $Na_3PO_4.12H_2O$ solution and 6 grams of 0.1% Hydraid 777 aqueous

- 13 -

solution were added to the solution. A hand sheet was prepared as previously described.

### Example 4

Magnesium fluorhectorite was prepared by adding 475 grams of 10% lithium fluorhectorite dispersion to 2500 ml of 2N $MgSO_4$. The floc was agitated and washed as previously described. A slurry containing 14 grams of Kaowool was prepared to which the magnesium fluorhectorite was added and the resultant slurry diluted to a solids contents of 2%. To this slurry was added 1.0 gram of 10% $Na_3PO_4$ . $12H_2O$ solution and 22.8 grams of 0.5% Hydraid 777 solution. A hand sheet was prepared as previously described.

### Example 5

Magnesium fluorhectorite floc was prepared as described above. A slurry was formed containing 3 grams of glass fiber, 3 grams of cellulose fibers, followed by the addition of the magnesium fluorhectorite floc. The solids content of the slurry was adjusted to 2% followed by the addition of 0.2 gram of 10% $Na_3PO_4$ . $12H_2O$, 15 grams of 0.5% Hydraid 777 and 15 grams of a polyethylene imide polyelectrolyte (Polmin P, manufactured by BASF Corporation). A hand sheet was formed as described above.

### Examples 6-9

Batches of iron fluorhectorite, cobalt fluorhectorite, nickel fluorhectorite and zinc

- 14 -

0155175

fluorhectorite were each prepared by ion exchanging a 10% lithium fluorhectorite gel with 1000 ml of 1N solutions of, respectively, $Fe(NO_3)_3 \cdot 9H_2O$ (Example 6), $CoCl_2 \cdot 6H_2O$ (Example 7), $Ni(NO_3)_2 \cdot 6H_2O$ (Example 8), and $Zn(NO_3)_2 \cdot 6H_2O$ (Example 9).  For each example, the flocculated particles were stirred and allowed to stand overnight.  The particles were then broken down by mechanical stirring and vacuum filtered.  The filtered floc was added to fresh deionized water and stirred vigorously for several minutes and vacuum filtered.  This was repeated 5 times.  The resultant filter cakes were analyzed for water content and diluted with deionized water to adjust the solids content to 10%.  The resultant slurries were homogenized for 30 minutes.  For each of Examples 6-9, films cast of the respective slurry were utilized in tests to measure the gasket sealing characteristics.

### Comparative Example

Potassium fluorhectorite (KFH) was prepared by the process specified in U.S. Patent No. 4,239,519.  A film was then cast of the KFH slurry and was tested in the same manner as the products of Examples 6-9 above. The data from these tests are shown in Table 2 below, which also lists the ionic radii of each exchange cation.

- 15 -

0155175

## Table 2

| Example No. | Ion | Ionic Radius(A) | Initial Flange Pressure (psi) | [MPa] | Leakage Rate (per minute) (psi) | [KPa] |
|---|---|---|---|---|---|---|
| 6 | $Fe^{3+}$ | 0.55 | 460 | 3.17 | 0.625 | 4.31 |
| | | | 858 | 5.92 | 0.048 | 0.33 |
| | | | 2500 | 17.24 | 0.011 | 0.076 |
| 7 | $Co^{2+}$ | 0.79 | 575 | 3.96 | 1.465 | 10.1 |
| | | | 1255 | 8.65 | 0.092 | 0.63 |
| | | | 2500 | 17.24 | 0.021 | 0.14 |
| 8 | $Ni^{2+}$ | 0.83 | 690 | 4.76 | 1.19 | 8.20 |
| | | | 1140 | 7.86 | 0.178 | 1.23 |
| | | | 2500 | 17.24 | 0.021 | 0.14 |
| 9 | $Zn^{2+}$ | 0.75 | 803 | 5.54 | 1.19 | 8.20 |
| | | | 1598 | 11.02 | 0.178 | 1.23 |
| | | | 2500 | 17.24 | 0.021 | 0.14 |
| Comparative Example | $K^{+}$ | 1.52 | 1370 | 9.45 | 0.943 | 6.50 |
| | | | 2050 | 14.13 | 0.313 | 2.16 |
| | | | 2500 | 17.24 | 0.190 | 1.31 |

a - Low-spin complex

The data indicate that the gasket material made from the potassium fluorhectorite floc does not seal as well as the gasket material made utilizing the small, multivalent cation-exchanged floc.

In addition, films made by the procedure of Examples 1-9 were separately submerged, for one hour each, in an acid solution (pH of 3) and an alkaline solution (pH of 13). No chemical decomposition was detected in the gasket materials upon removal from the solutions. Further tests indicated that the gasket materials of the present invention were stable to temperatures of 800°C.

- 16 -

0155175

What we claim is:

1. A composition comprising a silicate mica that has an anionic charge per structural unit within the range of -0.5 to -1.0, and contains interstitial cations at least some of which are multivalent cations having an ionic radius smaller than that of $Li^+$.

2. A composition as claimed in claim 1, wherein the said multivalent cations are $Zn^{2+}$, $Ni^{3+}$, $Co^{2+}$, $Fe^{3+}$, $Ce^{4+}$ or $Cu^{2+}$.

3. A method of preparing a gelled material, which comprises contacting a gelled silicate mica that contains interstitial lithium ions, sodium ions or both lithium and sodium ions and has an anionic charge per structural unit within the range of from -0.5 to -1.0 with a source of multivalent cations having an ionic radius smaller than that of lithium for a time sufficient to effect an ion exchange reaction between at least some of the multivalent cations and at least some of the interstitial ions.

4. A method as claimed in claim 3, wherein the said multivalent cations are $Zn^{2+}$, $Ni^{3+}$, $Co^{2+}$, $Fe^{3+}$, $Ce^{4+}$ or $Cu^{2+}$.

5. A method as claimed in claim 3, wherein the mica is prepared by contacting a body consisting essentially of crystals of a lithium and/or sodium water-swelling mica selected from the group of fluorhectorite, hydroxyl hectorite, boron fluorphlogopite, hydroxyl boron phlogopite, and solid solutions between those and between at least one of those and other structurally-compatible species selected from the group talc, fluortalc, polylithionite, fluorpolylithionite, phlogopite and fluorphlogopite, the crystals advantageously being of fluorhectorite, with a polar liquid, advantageously water, for a time sufficient to cause swelling of the crystals accompanied with the formation of a gel.

6. A composition prepared by contacting a body consisting essentially of crystals of a lithium and/or sodium water-swelling mica selected from the group of fluorhectorite, hydroxyl hectorite, boron fluorphlogopite, hydroxyl boron phlogopite, and solid solutions among those and between those and other structurally-compatible species selected from the group talc, fluortalc, polylithionite, fluorpolylithionite, phlogopite and fluorphlogopite, the crystals advantageously being fluorhectorite, with a polar liquid, advantageously water, for a time sufficient to cause swelling of the crystals accompanied with the formation of a gel, and contacting the gel so formed with a source of multivalent cations having an ionic radius smaller than that of lithium to effect an ion exchange reaction between at least some of the multivalent cations and at least some of the lithium and/or sodium ions.

7.  A shaped structure comprising the composition of any one of claims 1, 2 or 6.

8.  A gasket formed from the composition of any one of claims 1, 2 or 6.

9.  The use of a composition as claimed in claim 1 or claim 6 in the manufacture of a paper having a low fiber content.

10.  The use of a composition as claimed in claim 1 or claim 6 in the manufacture of paper on a conventional paper-making machine, especially a fourdrinier.

11.  The use of a composition as claimed in claim 1 or claim 6 in the manufacture of a gasket.

12.  The invention as claimed in any one of claims 9 to 11, wherein the multivalent cations are $Zn^{2+}$, $Ni^{3+}$, $Co^{2+}$, $Fe^{3+}$, $Ce^{4+}$ or $Cu^{2+}$.

13.  The invention as claimed in any one of claims 9 to 11, wherein the multivalent cations are $Mg^{2+}$ ions.